# EUROPEAN PATENT APPLICATION

(11) **EP 4 088 956 A1**
(43) Date of publication of application: **16.11.2022**
(21) Application number: 21173089.0
(22) Date of filing: 10.05.2021
(51) Int. Cl.: B60H 1/00, B60H 1/08, B60H 1/22, B60H 1/32, B60H 1/03

(54) **HVAC MODULE AND HVAC SYSTEM COMPRISING SUCH MODULE**

(71) Applicant: Saint-Gobain Glass France, 92400 Courbevoie (FR)
(72) Inventor: Bouillet, Fabien, 60200 Compiègne (FR); Xu, Xuejuan, 60200 Compiègne (FR)
(74) Representative: Saint-Gobain Recherche

(57) **Abstract**

The invention concerns a HVAC module (20) for a vehicle (1), comprising a body (22) housing an air passage (24) between an air inlet (26) and an air outlet (28a, 28b,28c), air blowing means (30) for directing air from the air inlet towards the air outlet (28a, 28b,28c), and air temperature adjusting means for heating and cooling the air flowing in the air passage (24). The air temperature adjusting means (24) comprise at least one main heat exchanger (40) located in the air passage and fed by at least one heat transfer fluid circuit (50), and the main heat exchanger (40) is configured to be reversibly switched between a cooling mode in which it is fed by heat transfer fluid so that the air flowing in the air passage (24) is cooled by heat transfer with the heat transfer fluid and a heating mode in which it is fed by heat transfer fluid so that the air flowing in the air passage (24) is heated by heat transfer with the heat transfer fluid.

## Description

The present invention is in the field of HVAC for vehicles, such as cars, trucks, buses, coaches, trains and similar.

HVAC (Heating Ventilation and Air Conditioning) systems are currently used for climate control of the vehicle cabins, defrosting and defogging functions of vehicle glazings, particularly windshields and backlites.

A HVAC system typically comprises a HVAC module placed inside the vehicle cabin, including cooling and heating units respectively connected to cooling and heating fluid circuits placed under the hood.

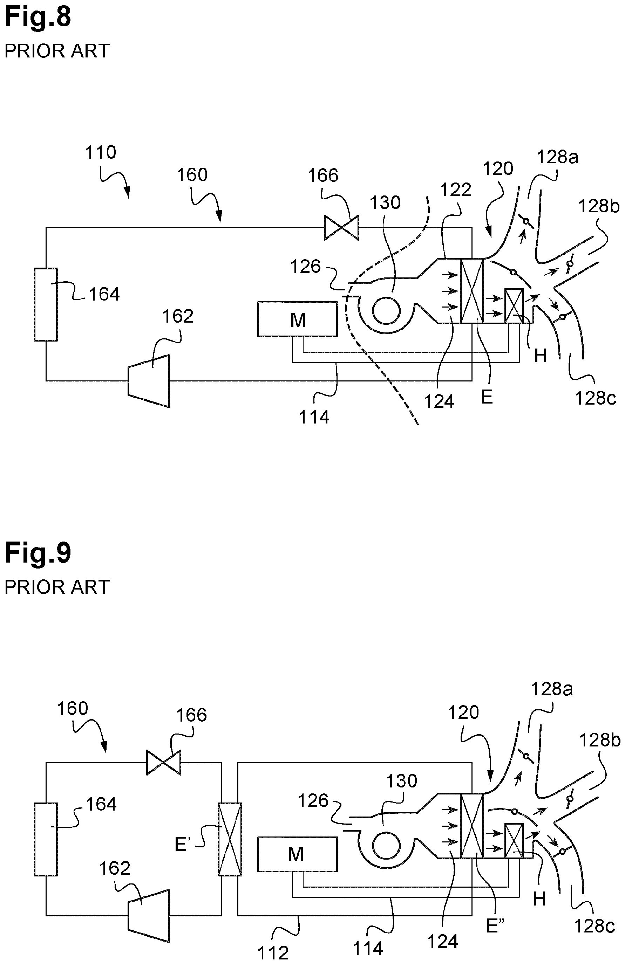

Figure 8 illustrates a conventional HVAC system 110 of the so-called direct-type, which is currently the dominant design in ICE (Internal Combustion Engine) vehicles or electric vehicles.

The HVAC module 120 of such HVAC system 110 conventionally comprises
- a body 122 housing an air passage 124 between an air inlet 126 and a plurality of air outlets 128a, 128b, 128c,
- air blowing means 130 adapted to draw in air from the air inlet 126 and direct it towards the air outlets 128a, 128b, 128c, and
- air temperature adjusting means comprising both an evaporator E as a cooling unit and a heating unit H, such cooling and heating units E, H being located inside the air passage 124 and intended to heat or cool the air flowing in said air passage 124, based on a user's request.

The evaporator E is part of a refrigerant circuit 160 which comprises, as shown in figure 8: a compressor 162 in which the refrigerant at gaseous state is compressed and set in motion, a condenser 164 where the refrigerant from the compressor 162 is cooled and changes phase from gas to liquid by exchanging heat with the ambient air, an expansion valve 166 with which the refrigerant changes phase from liquid to a mixture of gas and liquid, and cools down, and the evaporator E. At the evaporator E, the expanded refrigerant continues to change phase by heating thanks to the heat exchange with the ambient air. The refrigerant becomes totally gas at the end of the evaporator E and the air flowing in the air passage 124 is cooled.

The system is called "direct" as the air exchanges heat directly with the refrigerant cycle: the evaporator E is in direct contact with the air flowing in the air passage 124 and is positioned in the HVAC module 120 located in the vehicle cabin. The evaporator E functions with an air/refrigerant fluid technology.

The heating unit H is typically a heat exchanger fed by heat transfer fluid circulated through a dedicated circuit 114 and heated therein either by flowing through a water box where it exchanges calories with a coolant fluid of the ICE motor M, in the case of an ICE vehicle, or by an electric heater or a heat pump, in case of an electric vehicle.

A second known type of HVAC system, used in some electric vehicles, is the indirect HVAC system illustrated in figure 9. This system differs from the previous one in that the evaporator E', here also named chiller, is separated from the air passage 124 by an intermediate heat transfer fluid circuit 112 using a heat transfer fluid, for example a mixture of glycol and water. The chiller E' functions as a two fluid heat exchanger. It is arranged to implement a heat exchange between the refrigerant circulating in the refrigerant circuit 160 and the heat transfer fluid circulating in the heat transfer fluid circuit 112. The heat transfer fluid circuit 112 comprises another heat exchanger E" in the HVAC module 120, the heat exchanger E" acting as the cooling unit by performing heat exchange between the heat transfer fluid circulating in the heat transfer fluid circuit 112 and the internal air flow flowing in the air passage 124 and intended to be distributed in the vehicle cabin.

In cooling mode, air coming from the outside or from the vehicle cabin is cooled by heat exchange with the cooling unit E (in the direct system of figure 8) or E" (in the indirect system of figure 9), and - if needed to reach the temperature selected by the user - reheated through the heating unit H.

In heating mode, air is heated by the heating unit H alone.

In addition to heating and cooling the vehicle's cabin, the HVAC system also serves for air dehumidification and defogging: the air flowing through the air passage 124 is dried by water condensation on the cooling unit (E or E") and then heated up by the heating unit to reach a temperature target fixed by an HVAC control unit. Entrance of dehumidified air inside the cabin leads to a drop of the humidity rate therein, and hence limits the fogging phenomenon.

The conventional HVAC systems illustrated in figures 8 and 9 have following drawbacks: the presence of both cooling and heating units leads to a high volume of the HVAC module, reducing room in the area of the dashboard critical for vehicle architecture. Also, the heating unit is constantly heated by the engine in ICE vehicles, leading to a heat source in the vehicle cabin even when the external climate is hot and the HVAC module is in cooling mode. Only a combination of air flaps prevents the air from being heated by the heating unit in this condition.

A third drawback is that defogging, in particular in cold and wet climate conditions, uses both cooling and heating units on the same path. As explained hereabove, energy is consumed inefficiently to first cool the air by water condensation to dry it on the cooling unit and then heat up the air by heat exchange with the heating unit to reach the temperature target fixed on the HVAC control unit.

The present invention aims at overcoming these drawbacks of the prior art, by providing a HVAC module at a reduced cost, having a reduced volume, and improved energy savings.

According to the present invention, a HVAC module for a vehicle comprises:
- a body housing an air passage between at least one air inlet and at least one air outlet,
- means adapted to direct air from the air inlet towards at least one air outlet, and
- air temperature adjusting means for heating and cooling the air flowing in the air passage,
the HVAC module being characterized in that the air temperature adjusting means comprise at least one main heat exchanger located in the air passage and fed by at least one heat transfer fluid circuit,
and the main heat exchanger is configured to be reversibly switched between a cooling mode in which it is fed by heat transfer fluid so that the air flowing in the air passage is cooled by heat transfer with the heat transfer fluid and a heating mode in which it is fed by heat transfer fluid so that the air flowing in the air passage is heated by heat exchange with the heat transfer fluid.

The main heat exchanger forms one single component, responsible for both cooling and heating the air circulating in the air passage.

The use of a reversible main heat exchanger instead of both cooling and heating units of the prior art systems allows reducing the global costs of the vehicle thanks to a simpler and more compact architecture.

The main heat exchanger is dedicated to exclusively cool or heat the air of the air passage. It is configured to bring the temperature of the air in the air passage to a desired temperature corresponding to a user's request, according to a monotonic function (either increasing in the heating mode or decreasing in the cooling mode).

The heat transfer fluid supplying the main heat exchanger is advantageously the same fluid during cooling and heating mode, only the temperature of the fluid being adjusted to cool or, respectively, heat the air circulating in the air passage. The HVAC module of the present invention includes no air drying/dehumidifying function.

In order to accomplish the defogging function, additional independent defogging means should therefore be set up in the vehicle, advantageously in the form of an active heating glazing system. Such active glazing systems are already known, and encompass for example heating wires, heating film or special coatings on the vehicle glazing.

As the active glazing system manages the defogging and defrosting purposes, the HVAC module does not need to generate a high air flow rate as was needed in defogging or defrosting modes of conventional HVAC systems. The fact that the air flow rate is maintained low allows the size of the air directing means to be reduced: these means may be a simple fan, which is more compact and consumes less energy than a conventional blower (although a blower may also be used in the present invention).

The HVAC module according to the present invention can be implemented in ICE cars, electric cars or hybrid cars.

The invention further concerns a HVAC system for a vehicle, comprising:
- a HVAC module as defined hereabove,
- at least one heat transfer fluid circuit supplying the main heat exchanger with heat transfer fluid,
- cooling means for cooling heat transfer fluid to be supplied to the main heat exchanger, and
- heating means for heating heat transfer fluid to be supplied to the main heat exchanger,
- switching means for reversibly switching operation of the main heat exchanger between the cooling mode and the heating mode.

According to an example, the switching means comprise control means for powering on and off the heating means and the cooling means of the heat transfer fluid supplying the main heat exchanger.

According to an example, the heat transfer fluid circuit has one main loop including both the cooling means and the heating means.

According to an example, the heat transfer fluid circuit has a first main loop including the cooling means and a second main loop including the heating means.

According to another example, the switching means comprise a directional control valve, notably a four-way two-position directional control valve, adapted to control direction of the flow of heat transfer fluid between a first main loop of the heat transfer fluid circuit including the cooling means of the heat transfer fluid and a second main loop of the heat transfer fluid circuit including the heating means of the heat transfer fluid.

The switching means can be placed inside or outside the HVAC module (generally under the dashboard or under the hood).

According to an example, the HVAC system further comprises a refrigerant circuit comprising a compressor, a condenser, an expansion valve, and a second heat exchanger, and the cooling means comprise said second heat exchanger.

According to an example, the heating means comprise a heater, for example a PTC heater or a heat pump.

According to an example, the heating means comprise a heat exchanger, for example a heat exchanger fed by a coolant circuit of the vehicle engine.

The means for directing air from the air inlet towards at least one air outlet may typically comprise air blowing means. According to an example, these means may comprise a blower. According to another preferred example however, these air blowing means comprise a fan. Preferably, the air blowing means are formed of a single blower or a single fan.

In the present patent application, a blower is understood as a centrifugal fan that moves the air in a direction at an angle (typically 90 degree) to the incoming fluid. The blower can produce steady air flow at high pressure and low speed before passing through the heat exchanger.

A simple (axial) fan is understood as moving the air parallel to its shaft; it is generally compact, cheap, and applicable to produce a high speed low pressure air flow.

The present invention further concerns a multifunctional thermal management system, comprising a HVAC system as defined hereabove and a battery heat exchanger adapted for thermal management of a battery, wherein the battery heat exchanger is supplied by heat transfer fluid of the heat transfer fluid circuit supplying the main heat exchanger.

According to one embodiment, the heat transfer fluid circuit has one main loop feeding the main heat exchanger, said main loop including both the cooling means and the heating means on a thermal managing branch of the circuit, and the heat transfer fluid circuit has a secondary loop including the thermal managing branch, the secondary loop being mounted parallel to the first loop and feeding the battery heat exchanger, the multifunctional thermal management system further comprising a first valve for controlling the flow of heat transfer fluid in the main loop, and a second valve for controlling the flow of heat transfer fluid in the secondary loop.

According to an example, the battery heat exchanger is further connected to a passive heat transfer fluid circuit configured to supply cool heat transfer fluid to the battery heat exchanger.

The present invention further concerns a vehicle comprising a HVAC system or a multifunctional thermal management system as defined hereabove, and defogging means for at least one vehicle glazing, the defogging means being operable independently from the HVAC system.

It is to be understood that the different embodiments can be realized singly or in any combinations. In particular, the aforementioned technical features and those to be explained in the following can be used not only in the combinations indicated, but also in other combinations or alone, without departing from the scope of the present invention.

The invention will now be explained in more details with reference to particular and non-limitative embodiments of the invention. The figures depict, in a simplified, not-to-scale representation, schematic views of a HVAC system or parts thereof, according to these particular embodiments of the invention:
- [Fig 1] is a diagrammatic representation of a HVAC system according to a first embodiment of the present invention, in an ICE vehicle;
- [Fig 2] is a detailed view of a HVAC module according to a first example;
- [Fig 3] is a detailed view of a HVAC module according to a second example;
- [Fig 4] is a diagrammatic representation of a HVAC system according to a second embodiment of the present invention, in an electric vehicle;
- [Fig 5] is a diagrammatic representation of a HVAC system according to a third embodiment of the present invention;
- [Fig 6] is a diagrammatic representation of a multifunctional thermal management system according to an embodiment of the invention;
- [Fig 7] is an overall view of a vehicle equipped with a HVAC system according to the invention;
- [Fig 8] is a diagrammatic representation of a conventional HVAC system of the direct type;
- [Fig 9] is a diagrammatic representation of a conventional HVAC system of the indirect type.

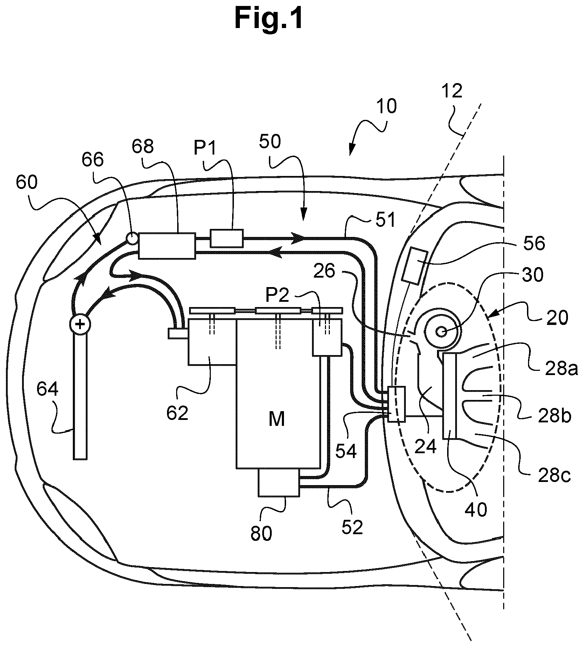

[Fig 1] is a diagrammatic representation of a HVAC system 10 according an embodiment of to the present invention, in an ICE vehicle. This HVAC system may also be used in hybrid cars.

The HVAC system 10 comprises a HVAC module 20 located in the vehicle cabin, and a fluid circuit 50 supplying heat transfer fluid to the HVAC module 20, placed under the hood.

On figure 1, a dotted line 12 marks a limit between components of the HVAC system 10 located inside the vehicle cabin (right of the line) and components located under the hood (left of the line).

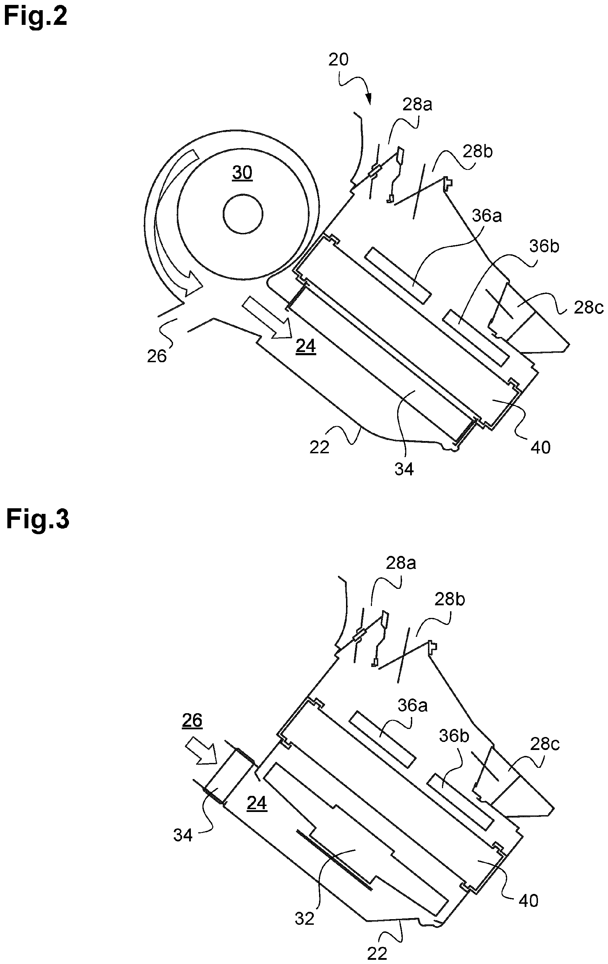

With reference to figure 2, which illustrates one possible embodiment, the HVAC module 20 comprises a body 22 in which a passage 24 for air flow is formed between an air inlet 26 linked to a recirculation intake and/or a fresh air intake (not shown) and a plurality of air vents 28a, 28b, 28c supplying different zones of the vehicle cabin.

The passage 24 is called air passage in the entire present exposure. The air vents 28a, 28b, 28c may include for example a dashboard outlet, a front side feet outlet, a rear vent outlet, and a rear feet outlet, each air vent comprising a valve (not shown) which can be opened or closed in response to a user's instructions.

For directing air from the air inlet 26 and towards the air outlets, the HVAC module 20 here comprises air displacing means in the form of air blowing means, which may take the form of a blower 30 as shown in figure 2. As an example, said air blowing means are configured to draw in air from the air inlet 26 and direct it towards the air outlets. According to another example, air may be forced through the air inlet by means outside the body: air blowing means inside the body may then serve to maintain movement of the air along the air passage and to the one or more outlets.

According to another embodiment, the blower may be replaced by an axial fan 32 that displaces air from the air inlet 26 and towards the air outlets 28a, 28b, 28c, as illustrated in figure 3.

As an example, the source of air flowing through the air inlet 26 is controlled by moving an air recirculation door (not shown) between a fully closed and a fully opened position: is the air recirculation door fully opened, only outside air goes into the air blowing means; is the air recirculation door fully closed, only recirculated air from the cabin goes into the air blowing means. The door can also be partially open to allow a mixture of outside and inside air to pass through the air blowing means.

According to the present invention, a main heat exchanger 40 is provided in the air passage 24, so as to be flowed through by the air coming in from the air inlet 26. Advantageously, the main heat exchanger 40 covers the entire cross-section of the air passage 24.

The HVAC module 20 may further include an air filter 34, generally placed upstream of the main heat exchanger 40.

It may also include one or more optional pre-heating resistances 36a, 36b for cold and extreme climate, downstream of the main heat exchanger 40, and /or an auxiliary PTC heater (not shown) for transient conditions such as winter start-up when the ICE engine is cold.

The main heat exchanger 40 is a two-fluid heat exchanger, intended to exchange heat between a heat transfer fluid and the air passing across the main heat exchanger 40 when flowing along the air passage 24. The heat transfer fluid is supplied by the heat transfer fluid circuit 50 located at least partially under the hood and comprising one or more components for heating or cooling said fluid.

The heat transfer fluid is typically a mixture of water and glycol.

According to the invention, the main heat exchanger 40 forms a reversible heating and cooling unit, which can be supplied either by hot fluid (heating mode) or by cold fluid (cooling mode) depending on the user's need.

In other words, the main heat exchanger is configured to be supplied with heat transfer fluid which has been previously either cooled or heated depending on whether the main heat exchanger works in a cooling mode (for producing cool air to be supplied to the car cabin to lower the temperature inside the cabin) or a heating mode (for producing hot air to be supplied to the car cabin to increase the temperature inside the car cabin).

In the example of figure 1, the heat transfer fluid circuit 50 has a first main loop 51 including cooling means for cooling the heat transfer fluid, and a second main loop 52 including heating means for heating the heat transfer fluid.

A control valve 54 allows controlling the flow rate and distribution of the heat transfer fluid flow towards either the first or the second main loop 51, 52, and so forms a switching means for reversibly switching operation of the main heat exchanger 40 in the cooling mode in which it is fed by cool heat transfer fluid and the heating mode in which it is fed by hot heat transfer fluid.

The control valve 54 is for example a four-way two-position directional control valve controlled by the engine control unit 56 based on thermal settings in the car.

Is the HVAC module 20 in a cooling mode, the valve 54 directs the heat transfer fluid in the first main loop 51 of the transfer fluid circuit 50.

Is the HVAC module in a heating mode, the valve 54 directs the heat transfer fluid in the second main loop 52 of the transfer fluid circuit 50.

The HVAC system 10 according to the invention is of the indirect type, that is the first main loop 51 of the heat transfer fluid circuit 50 forms an intermediate loop between the main heat exchanger 40 and a refrigerant circuit 60. The refrigerant circuit 60 comprises, in a known manner, a compressor 62, a condenser 64, an expansion valve 66, and a two fluid heat exchanger 68 also served as a chiller, forming a second heat exchanger of the HVAC system 10.

Refrigerant gas vapor enters the compressor 62, where it is compressed to a higher pressure, increasing its temperature. The hot, compressed refrigerant vapor is therefore at a temperature and pressure at which it can be condensed and is routed through the condenser 64, usually in the front of the vehicle. In the condenser 64, the moving fluid from the compressor 62 is cooled and changes phase from gas to liquid by exchanging heat with the ambient air. At the expansion valve 66, the fluid out of the condenser 64 is expanded, undergoes an abrupt reduction in pressure, which results in a reduction of the temperature. The fluid is partially changing phase from liquid to a mixture of gas and liquid out of the expansion valve 66. At the chiller 68, the heat of the heat transfer fluid and ambient air causes the liquid part of the cold refrigerant mixture to evaporate. The heat transfer fluid and the ambient air are therefore cooled, and the refrigerant becomes totally gaseous at the end of the chiller 68. The refrigerant fluid out of the chiller 68 finishes the loop by entering the compressor 62.

The chiller 68 is arranged to implement a heat exchange between the refrigerant fluid circulating in the refrigerant circuit 60 and the heat transfer fluid circulating in the first main loop 51 of the heat transfer fluid circuit 50. The heat transfer fluid then performs heat exchange with the internal air flow flowing in the air passage 24 and intended to be distributed in the vehicle cabin.

The second main loop 52 of the heat transfer circuit 50 includes a third heat exchanger 80 performing heat exchange between a coolant of the vehicle engine M and the heat transfer fluid.

Is the first main loop 51 closed by control valve 54, a pump P1, for example a mechanical or an electric pump, forces the fluid to flow around the first main loop 51 and through the chiller 68, cooling the heat transfer fluid.

Is the second main loop 52 closed by control valve 54, a pump P2, for example a mechanical or an electric pump, forces the fluid to flow around the second main loop 52 and through the third heat exchanger 80, heating the heat transfer fluid.

Pumps P1, P2 are controlled by the engine control unit 56 based on temperature settings in the car cabin. The flow rate of heat-transfer fluid can also be controlled by acting on the speed of said pumps P1, P2.

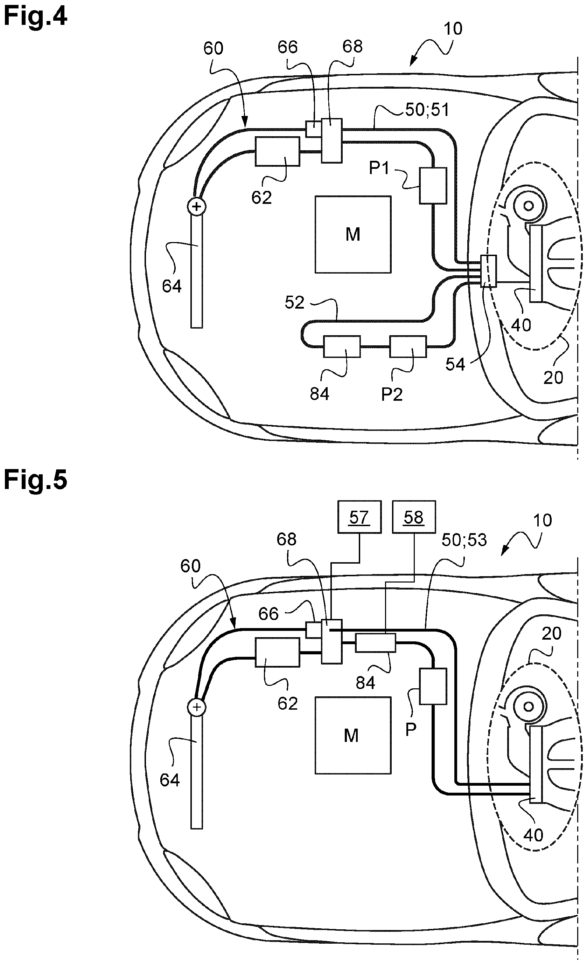

Figure 4 diagrammatically illustrates a second embodiment of a HVAC system according to the present invention, implemented in an electric car (although such HVAC system may also be used in hybrid cars or ICE cars).

In the example, the heating means in the second main loop 52 comprise a PTC heater 84 instead of the heat exchanger 80. In another embodiment, the PTC heater 84 may also be replaced by a heat pump module.

Other elements of the HVAC module or the HVAC system being similar to that described with reference to either figures 1, 2 or 3, they are not described any further.

Figure 5 diagrammatically illustrates a third embodiment of a HVAC system 10 according to the present invention. This embodiment is particularly adapted for electric vehicles, but may alternatively be implemented in ICE vehicles or hybrid cars.

According to this embodiment, the heat transfer fluid circuit 50 includes both cooling and heating means in a single main loop 53.

As in the first or second embodiments disclosed with reference to figures 1 and 4 respectively, the cooling means are formed by a second heat exchanger (chiller) 68 arranged to implement a heat exchange between a refrigerant fluid circulating in a refrigerant circuit 60 of the type described before and the heat transfer fluid circulating in the main loop 53 of the heat transfer fluid circuit 50. The heat transfer fluid then performs heat exchange with the internal air flow flowing in the air passage 24 and intended to be distributed in the vehicle cabin.

In this third embodiment, however, the heating means are not arranged on a separate loop but on the same loop than the chiller 68. As an example, as in the second embodiment of figure 4, the heating means are formed by a PTC heater 84 or a heat pump module or any adapted heating means.

The switching means for reversibly switching operation of the main heat exchanger in a cooling or in a heating mode here comprise control means 57, 58 for powering on and off respectively the chiller 68 and the PTC heater 84.

Is the HVAC module 20 in a heating mode, the chiller 68 is turned off and the PTC heater 84 turned on.

Is the HVAC module 20 in a cooling mode, the chiller 68 is turned on and the PTC heater 84 turned off.

Temperature sensor feedbacks are used to determine the right outlet air temperature, which is obtained by a combination of controls over the flow rates of heat transfer fluid, compressor speed, heater power, mixing ratio of outside/inside air.

Additional means for regulating the flow rate may be integrated in the circuit (although not mandatory).

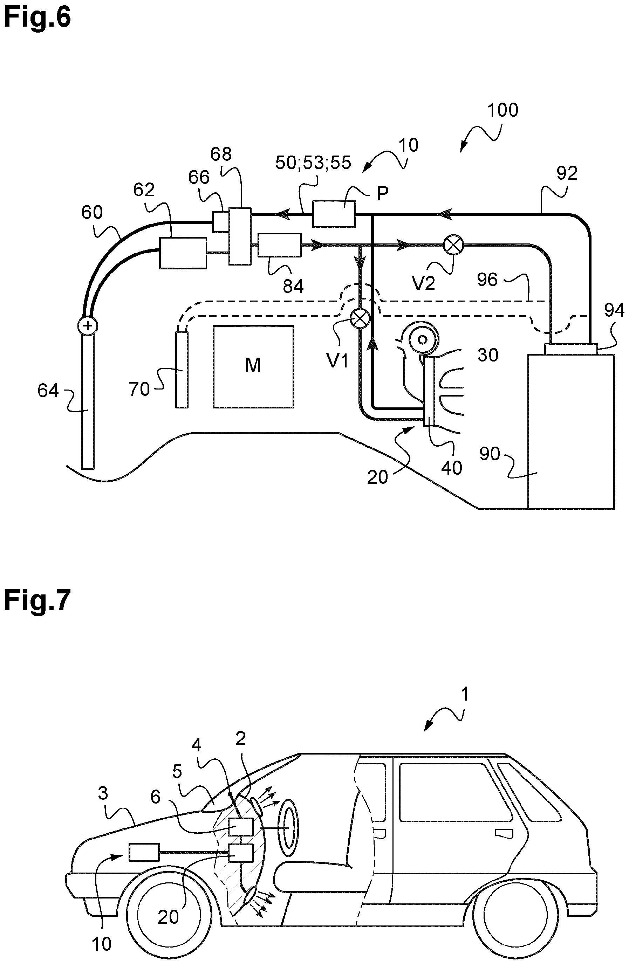

Thermal management of electric vehicles, especially battery electric vehicles, concerns not only the heating and cooling of the passenger cabin but also that of the battery. Figure 6 diagrammatically illustrates a multifunctional thermal management system 100 according to a possible embodiment of the present invention, implemented in an electric vehicle. The multifunctional system 100 comprises a HVAC system 10 according to the invention, and battery heat exchanger located in the vicinity of the vehicle's battery, and adapted for thermal management of said battery.

In the present example, the HVAC system 10 is one of the type described with reference to figure 5.

As described previously with reference to figure 5, the heat transfer fluid circuit 50 has one single main loop 53 feeding the main heat exchanger 40, said main loop including both the cooling means (here the chiller 68) and the heating means (here the PTC heater 84) on a so-called thermal managing branch 55 of the circuit 50.

The heat transfer fluid circuit 50 further has a secondary loop 92 including said thermal managing branch 55, and intended to feed the battery heat exchanger 94 located at the battery side and adapted for thermal management of the battery 90.

As shown in figure 6, the main heat exchanger 40 and battery heat exchanger 94 are mounted in parallel.

A first valve V1 allows or stops the flow of heat transfer fluid in the main loop, through the main heat exchanger 40.

A second valve V2 allows or stop the flow of heat transfer fluid in the secondary loop 92, through the battery heat exchanger 94.

Is the first valve V1 closed and the second valve V2 opened, battery thermal management can be accomplished with the chiller 68 and/or PTC heater 84, enabling to adjust temperature of the heat transfer fluid.

Is the first valve V1 opened and the second valve V2 closed, the HVAC module 20 works exactly as was described with reference to figure 5.

Are both valves opened, the battery 90 is cooled if the HVAC system 10 is in a cooling mode and heated if the HVAC system 10 is in heating mode.

In order to ensure a proper battery thermal management even in case the battery 90 should be cooled while the HVAC system 10 is used in a heating mode, the battery heat exchanger 94 is advantageously linked to an auxiliary heat transfer fluid circuit 96 provided with cooling means. When valve V2 is closed, the auxiliary heat transfer fluid circuit 96 forms a passive cooling circuit supplying the battery heat exchanger with cold fluid.

In the example of figure 6, the cooling means of the auxiliary circuit comprise the vehicle's radiator 70, which at the same time cools the engine M and the fluid flowing in the auxiliary heat transfer fluid circuit 96.

[Fig 7] is an overall view of a vehicle 1 equipped with a HVAC system 10 according to the invention: the HVAC module 20 is located right under the dashboard 2. The rest of the HVAC system 10 is located under the hood 3. Defogging means 4 are advantageously provided on the windshield 5 and possibly (but not necessarily) on one or several other car glazing(s). The defogging means 4 may include active glazing systems provided for example with heating wires, heating film or special coatings. The defogging means 4 can be controlled independently of the HVAC system 10. The defogging means 4 can also interact with HVAC control through shared sensor feedbacks for example. Preferably, the user interface 6 on the dashboard is independently connected to the HVAC module 20 and the defogging means 4.

## Claims

1. A HVAC module (20) for a vehicle (1), comprising
- a body (22) housing an air passage (24) between at least one air inlet (26) and at least one air outlet (28a, 28b, 28c),
- means (30, 32) adapted to direct air from the air inlet towards at least one air outlet (28a, 28b, 28c), and
- air temperature adjusting means for heating and cooling the air flowing in the air passage (24),
the HVAC module being **characterized in that** the air temperature adjusting means (24) comprise at least one main heat exchanger (40) located in the air passage and fed by at least one heat transfer fluid circuit (50),
and the main heat exchanger (40) is configured to be reversibly switched between a cooling mode in which it is fed by heat transfer fluid so that the air flowing in the air passage (24) is cooled by heat transfer with the heat transfer fluid and a heating mode in which it is fed by heat transfer fluid so that the air flowing in the air passage (24) is heated by heat transfer with the heat transfer fluid.

2. A HVAC system (10) for a vehicle (1), comprising:
- a HVAC module (20) according to claim 1,
- at least one heat transfer fluid circuit (50) supplying the main heat exchanger (40) with heat transfer fluid,
- cooling means (68) for cooling heat transfer fluid to be supplied to the main heat exchanger (40), and
- heating means (80, 84) for heating heat transfer fluid to be supplied to the main heat exchanger (40),
- switching means (54, 57, 58) for reversibly switching operation of the main heat exchanger (40) between the cooling mode and the heating mode.

3. The HVAC system (10) according to claim 2, wherein the switching means comprise control means (57, 58) for powering on and off the heating means (84) and the cooling means (68).

4. The HVAC system according to claim 2 or 3, wherein the heat transfer fluid circuit (50) has one main loop (53) including both the cooling means (68) and the heating means (84).

5. The HVAC system according to claim 2 or 3, wherein the heat transfer fluid circuit (50) has a first main loop (51) including the cooling means (68) and a second main loop (52) including the heating means (80).

6. The HVAC system (10) according to claim 5, wherein the switching means comprise a directional control valve (54), notably a four-way two-position directional control valve, adapted to control direction of the flow of heat transfer fluid between the first main loop (51) and the second main loop of the heat transfer fluid circuit (50).

7. The HVAC system according to any one of claims 2 to 6, further comprising a refrigerant circuit (60) comprising a compressor (62), a condenser (64), an expansion valve (66), and a second heat exchanger (68), and the cooling means comprise said second heat exchanger (68).

8. The HVAC system according to any one of claims 2 to 7, wherein the heating means comprise a PTC heater (84) or a heat pump.

9. The HVAC system according to any one of claims 2 to 8, wherein the heating means comprise a heat exchanger (80) fed by a coolant circuit of the vehicle engine.

10. The HVAC system (10) according to any one of claims 2 to 9, wherein the means (30, 32) adapted to direct air from the air inlet towards at least one air outlet comprise air blowing means.

11. The HVAC system (10) according to claim 10, wherein the air blowing means comprise a fan (32).

12. A multifunctional thermal management system (100), comprising a HVAC system (10) according to any one of claims 2 to 11 and a battery heat exchanger (94) adapted for thermal management of a battery (90), wherein the battery heat exchanger is supplied by heat transfer fluid of the heat transfer fluid circuit (50) supplying the main heat exchanger (40).

13. The multifunctional thermal management system of claim 12, wherein the heat transfer fluid circuit (50) has one main loop (53) feeding the main heat exchanger (40), said main loop (53) including both the cooling means (68) and the heating means (84) on a thermal managing branch (55) of the circuit (53), and the heat transfer fluid circuit (50) has a secondary loop (92) including the thermal managing branch (55), the secondary loop (92) being mounted parallel to the first loop (53) and feeding the battery heat exchanger (94), the multifunctional thermal management system (100) further comprising a first valve (V1) for controlling the flow of heat transfer fluid in the main loop (53), and a second valve (V2) for controlling the flow of heat transfer fluid in the secondary loop (92).

14. The multifunctional thermal management system (100) according to claim 12 or 13, wherein the battery heat exchanger (40) is further connected to a passive heat transfer fluid circuit (96) configured to supply cool heat transfer fluid to the battery heat exchanger.

15. A vehicle (1) comprising a HVAC system (10) according to any one of claims 2 to 11 or a multifunctional thermal management system according to any one of claims 12 to 14, and defogging means (4) for at least one vehicle glazing (5), the defogging means (4) being operable independently from the HVAC system (10).
